# EUROPEAN PATENT APPLICATION

(11) **EP 1 335 323 A2**
(43) Date of publication of application: **13.08.2003**
(21) Application number: 03002124.0
(22) Date of filing: 30.01.2003
(51) Int. Cl.: G06T 11/60

(54) **Hint data editor and method of editing hint data**

(30) Priority: 30.01.2002 US 60475
(71) Applicant: Xerox Corporation, Rochester, New York 14644 (US)
(72) Inventor: Herron, Stephen K., Webster, New York 14580 (US)
(74) Representative: Grünecker, Kinkeldey, Stockmair & Schwanhäusser Anwaltssozietät

(57) **Abstract**

A hint editor for editing raster content image rendering hints including a hint reader for separating the rendering hints from the image and a hint display for displaying the rendering hints apart from the image. The hint editor can also includes a hints depicters assignor for assigning hint depicters to represent and identify the hints for visual display. The hint editor can also include a hint writer for generating new hints and a difference display for displaying difference hints. The hint editor also includes hint selectors for selecting hints. The selected hints can be displayed apart from the image. The selected hints can also replace hints.

## Description

The present invention relates to a hint editor, and more particularly to an editor for providing interactive visual editing of rendering hints for an image and a method for same. It finds particular application in conjunction with raster image files including mixed raster content image files, and will be described with particular reference thereto. However, it is to be appreciated that the present invention is also amenable to other like applications.

Raster content images include a plurality of pixels which form the image when printed or displayed. Each pixel occupies a location in the image, and each image location can be identified in a variety of known manners. Raster content images are typically defined by raster content image files which contain pixel information. The pixel information can indicate whether the pixel is on or off, and may describe the pixel color. Pixel location data defining the location of the pixel, or a group of pixels, in the image is also typically stored in the raster content image file.

Images defined by raster content image files can include hints, also known as rendering hints, tags or metadata, which define areas within the image that require appropriate actions to properly print the image. The areas in the image can be individual pixels or groups of pixels. Examples of the uses for hints include but are not limited to keeping edges sharp, blurring edges, segmenting images for different screens, and defining the source of the image.

Rendering hints can be derived in the original image file explicitly from a user directive, or implicitly from user directed operations and from an analysis of image content. The hints are closely associated with the image and are typically not displayed or printed apart from the image. Rather, the results of the hinting actions performed at the associated image locations are viewed when the image with hint data is printed.

After the originating hint-writer produces the hints, modifications to the image do not update the hints, making them inconsistent with the edited image data and, thus, inappropriate. Edited images having inappropriate hints can be degraded when printed. It is desirable to edit or update the hints after an image is modified to ensure that the hints are consistent with the modified image.

The present invention contemplates an editor for editing rendering hints, which overcomes the above-referenced problems and others.

In accordance with one aspect of the present invention, a hint editor is provided for editing hints corresponding to an edited image defined by a raster content image file to make the rendering hints consistent with the modified image.

The hint editor includes a hint reader for reading an edited image and separating the image data from the hint data. The hint editor also includes a hints display for providing a visual representation of the rendering hints apart from the image. The hint editor can display the hints in locations corresponding to the image locations where the hinting actions are applied. The hint editor can use index depicters to represent and identify the hints including colors, shades and symbols for visual display.

In accordance with another aspect of the present invention, a method of editing rendering hints for a raster content image file is provided. The method includes separating the rendering hints from the image, editing the rendering hint-plane, recombining the edited rendering hint-plane with the image file. The method further includes displaying the rendering hints apart from the image for editing. The displaying step can include displaying a visual representation of the rendering hints. Index depicters can be used to visually represent and identify the hints.

The advantages and benefits of the present invention will become apparent to those of ordinary skill in the art upon reading and understanding the following detailed description of the preferred embodiments.

FIGURE 1 is a block diagram illustrating a hint-plane editor in accordance with the present invention;

FIGURE 2 illustrates the hint display output of the hint editor in accordance with the present invention;

FIGURE 3 illustrates an alternate embodiment of the hint display output of the hint editor in accordance with the present invention; and

FIGURE 4 illustrates the hint plane editor and graphic user interface in accordance with the present invention; and

FIGURE 5 is a flow chart illustrating a method of editing hints in accordance with the invention.

It is to be understood that the specific devices and processes illustrated in the attached drawings, and described in the following specification are simply exemplary embodiments.

Hints are typically not displayed or printed apart from the image, and only the results of the hinting actions performed on the associated image locations are typically viewed. Modifications to the original image can result in an edited image having some rendering hints which are not consistent with the edited image data. The inconsistent hints, also called inappropriate hints, degrade the edited image when it is subsequently printed.

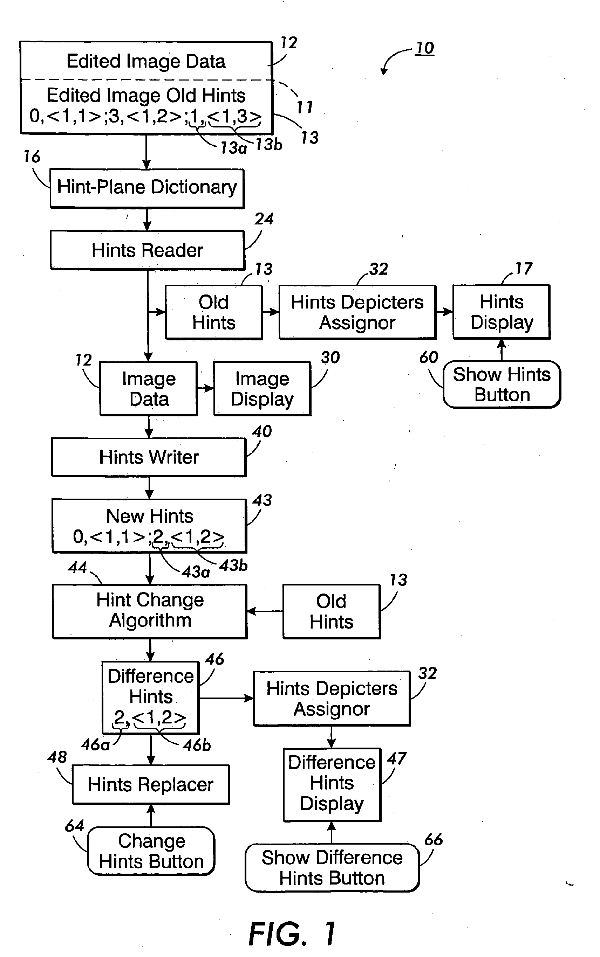

Referring to Fig. 1, a block diagram is shown illustrating a hint editor indicated generally at 10 in accordance with the invention. The hint editor 10 includes an edited image cache 11 for storing the edited raster content image information. The cache 11, as well as all other caches used in the invention as described below, can be any suitable known cache. The image information includes image data 12 which defines the edited image. The image information also includes rendering hint data associated with the edited image and referred to herein as "old hints" 13. The old hints can come from a separate area, separate channel or even a separate file from the associated raster content image file.

The old hints 13 include hint indices 13a which reference the hinting action to be taken in the image. Examples of hinting actions include but are not limited to blurring, sharpening, segmenting, and grouping. The old hints also include location data 13b which define the locations in the image, such as the pixel locations described above, where the hinting actions are applied. Typically the hint indices 13a are associated with the image on a one-to-one ratio of index positions to image pixels, although any other suitable ratio can be used. Also, layer hints are hints that have indices 13a pertaining to several locations in the image.

The old hints 13 can be stored in a hint-plane that maps the location of the hinting actions in the image. Each position in the hint-plane can hold one or more hint indices 13a, and the location data 13b is associated with the hint indices by the position each index occupies in the hint-plane. The hint-plane can be encoded as a 2-, 4- 8-bit depth hint-plane, although any suitable bit-depth may be used. A typical hint-plane comprises an 8-bit deep plane so that each position can accommodate a hint index ranging from 0 to 255, or several indexes having smaller ranges.

The hint editor 10 also includes a hint-plane dictionary 16 which cross references the hint index 13a with the name of the corresponding hinting action providing a standard which can be used by any software and/or devices creating or using the image. The name of the hinting action can be encoded in ASCII encoding or any other suitable encoding. An example of a basic hint index and name association in the hint-plane dictionary is:
[3; Contour].

A composite rendering hint is composed of multiple basic hint action names and associated bit-depth level indices 13a which apply to the same image location. An example of a composite index and name association is:
[24; 3; Contour, 154; ICCPerceptual].

In this example, "24" is the composite hint and it consists of two hints, "3" and "154". The dictionary name of the hinting actions are "contour" and "ICCPerceptual".

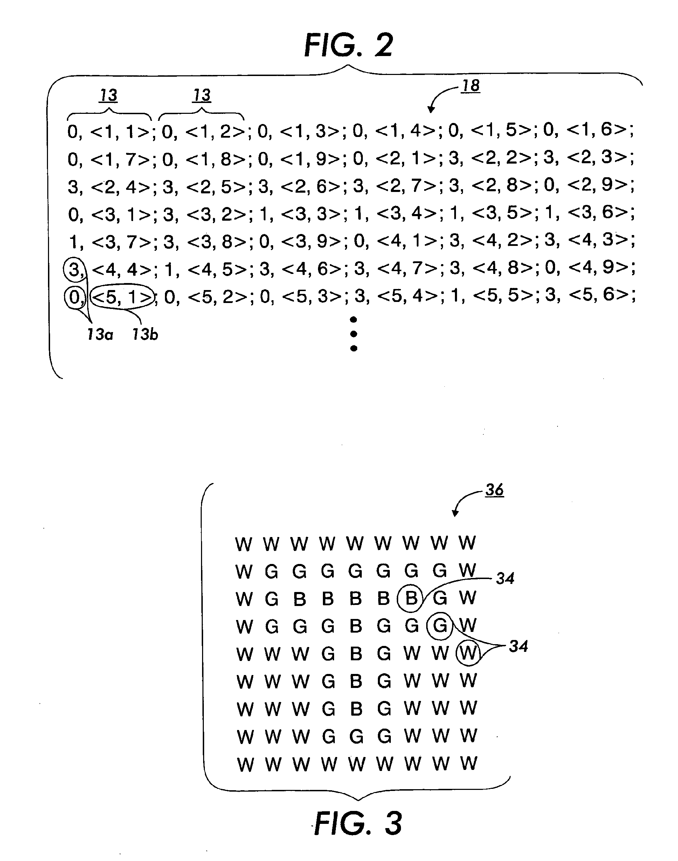

The hint editor 10 includes a hint display 17 for displaying the old hints 13 apart from the image. An example of an output of the hints display 17 is shown generally at 18 in Fig. 2. The hint display output 18 includes a display of hints 13 corresponding to an image of the letter "T".

In Fig. 2, the hint display output 18 includes hint indices 13a including a 3 which is an edge hint for sharply defining the edges of the letter "T", a 0 which is a white background hint and a 1 which is for displaying the body of the "T".

The hint display output 18 also includes the associated location data 13b of the hints 13 corresponding to the image pixel location data described above. The hints location data 18 can be displayed in a coordinate system defining associated image pixel locations, a count of pixels, a matrix, or in actual locations which correspond to the image as shall be described below.

Referring again to Fig. 1, the hint editor 10 also includes a hints reader 24 for reading the edited image stored in the cache 11 and separating the old hints 13, including the hint indices 13a and hint index location data 13b, from the image information. The hints reader can convert layer hints to basic pixel hints and composite pixel hints. The hint editor 10 can also include an optional image display 30 for displaying the edited image data 12 without hint data as described below.

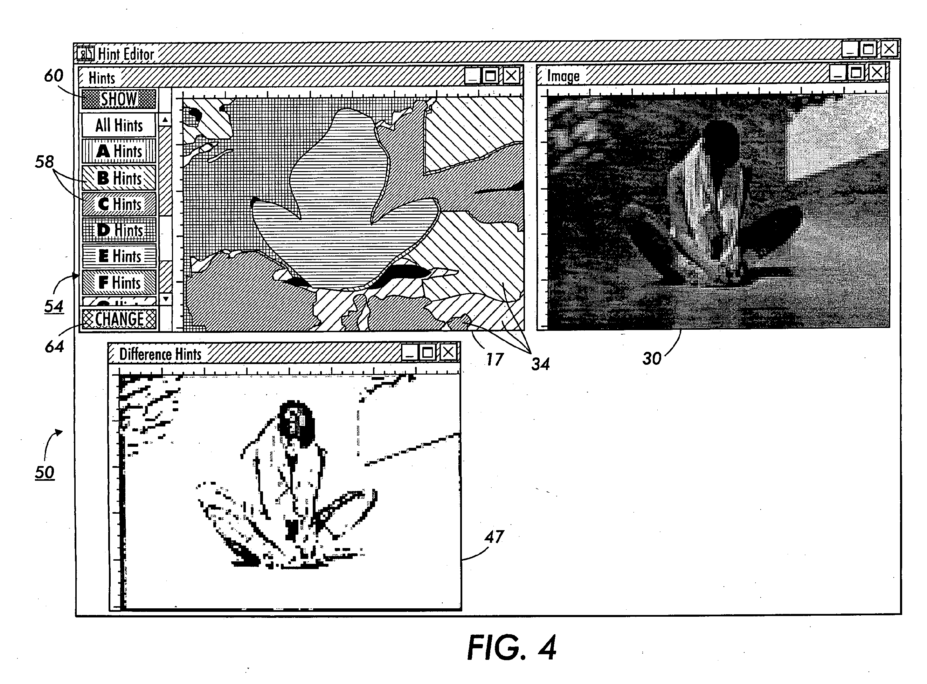

The hint editor 20 can also include a hints depicters assignor 32 for assigning index depicters 34 (as shown in Figs. 3 and 4) to the hint indices, such as the hint indices 13a of the old hints 13. The same hint depicter 34 will be used for all indices corresponding to a particular hinting action so that the hint depicter will represent and identify the rendering hint index for visual display. Any suitable index depicters 34 for representing and identifying the hints can be used, including but not limited to colors, shades of colors, shades of gray, or symbols including but not limited to words, letters or numbers, or any other known symbols. The hints depicters 34 can be encoded in ASCII, Unicode, or any known method of computer encoding.

Referring to Fig. 3, another example of a hints display output is shown generally at 36. The hints display output 36 includes a plurality of index depicters 34 including different colors each representing and identifying a different hint index 13a corresponding to the same image of the letter "T" used in the example of Fig. 2. In this example, the hints depicters assignor 32 assigns the color white to the hint index 0, the color blue to the hint index 1, and the color green to the hint index 3. However, for the purpose of simplicity, letters are shown rather than colors, with the letter W representing white, G representing green and B representing blue.

Further, the hint indices 13a, or in the example of the hint display shown Fig. 3 the index depicters 34, can be displayed in the locations defined by the location data 13b. Therefore, the hint indices 13a or depicters 34 will be displayed in the locations corresponding to the image locations to which the hints 13 apply. Composite hint indices 13a or depicters 34 applicable to the same image location can be displayed one at a time as selected by the user.

The hint editor 20 includes a hint writer 40 for generating new hints 43, including new hint indices 43a and new hint location data 43b. The new hints 43 will contain many hints which do not change and thus are the same as the old hints 13. Often, much of the new hint location data 43b will be the same as the old hint location data 13b. The hint writer 40 uses known hint generation algorithms for creating new hints 43 using the edited image data 12. Specific algorithms are typically used for creating each type of hint. These algorithms are similar to the known algorithms that generated the hints in the original image.

The hint editor 20 can also include a hint change algorithm 44 which compares the new hints 43 with the old hints 13. The hint change algorithm 44 generates difference hints 46 which are hints that do not belong to both of the groups of new hints 43 and old hints 13.

The difference hints 46 can be new hints 43 which do not belong to the group of old hints 13. One example, which should not be considered limiting, in which the hint change algorithm 44 can generate the difference hints 46 is by comparing the old hint indices 13a with the new hint indices 43a for the same location data 13b, 43b to find the new hint indices 46a that have changed for particular image locations.

Alternatively, the difference hints 46 can be old hints 13 which do not belong to the group of new hints 43. One example, which should not be considered limiting, in which the hint change algorithm 44 can generate difference hints 46 which are old hints 13 is by comparing the old hint indices 13a with the new hint indices 43a for the same location data 13b, 43b to find the old hint indices 13a that have changed for particular image locations.

The difference hints 46 can be displayed in a separate difference hints display 47 in manners similar to the hints display 17 described above. A hint depicters assignor 32, similar to that described above, can be used to assign hint depicters 34 to the difference hint indices 46a for representing and identifying the difference hints 46 for display.

The editor 10 also includes a hints replacer 48 for replacing the old hints 13 with the new hints 43 and combining the new hints 43 with the image data 12. Alternatively, the hint editor 20 can provide the user with a list of the types of hints generated by the hint writer 40 and the user can selectively replace hints old hints 13 with new hints 43 in the edited image.

The hint displays 17 and 47 can be used to identify inappropriate hints. Inappropriate rendering hints include, but are not limited to, hints that are no longer consistent with the corresponding image data due to the editing of the original image to create the edited image, hints that are foreign to the hint reader 24 and thus not supported, hints that cannot be recreated, hints that have become corrupted, and hints that are invalid. The hint-plane dictionary 12 can be classified according to hints which are available for re-hinting, hints which have been edited by the user, hints which are known to the editor 10 but do not have a tool available to create the hint, and hints which are unknown to the editor 10.

The hint editor user can use the difference hints display 47 to determine the inappropriate hints by viewing difference hints 46 which are the new hints that have changed. By displaying the difference hints 46 which are new hints 43, the user can indirectly identify inappropriate hints and view the new hints 43 which can replace the old hints 13. Alternatively, the user can view the edited image's inappropriate hints using the difference hints display 47 to display difference hints 46 that are the old hints 13 which have changed.

Displaying the difference hints 46 assists the user in identifying inappropriate hints and deciding whether to keep the old edited image hints 13 or replace them with the new hints. The user can also select only a subgroup of the difference hints to be changed, and replace a subgroup of the old hints with the new hints corresponding to the same image locations in the edited image.

Referring to Fig. 4, an embodiment of the hint editor 10 is shown including a graphic user interface 50 for operating and controlling the hint editor 10. The interface 50 includes the hints display 17, image display 30 and hint difference display 47. The hint display 17 is shown displaying a more complex arrangement of hints 13 corresponding to the image shown in the image display 30. The hints 13 in the hint display 17 are represented and identified by the different index depicters 34 which are displayed in locations corresponding to the image locations defined by the image location data 13b.

The hint editor graphic user interface 50 can also include tools, such as a tool bar 54, which enable the user to produce and manipulate the hint and image data presented in the displays 17, 30, 47. The tool bar 54 includes hint select buttons 58 for selecting specific hints. Typically, each hint select button 58 corresponds to a different type of hint index 13a. Each hint select button will select all the hints 13 having the same hint index 13a.

The hint select buttons 58 can include identification information to identify which hints will be selected. For example, the identification information can include the hint depicters, such as the symbol or color, assigned to represent the hint index for that hint, or it can include a written description of the hint such as "A Hints", "B Hints", "C Hints", etc., where A, B, and C are textual references taken from the hint-plane dictionary 12 which identify the corresponding hinting actions.

The hint select buttons 58 can also be used to select groups of hints, including all the hints. The hint select buttons can be generated dynamically based on the hints contained in the original edited image as defined by the image's hint-plane dictionary. Further, the other hints contained in composite hints, which are not displayed by default, can be selectively displayed using the tool bar 54.

The tool bar 54 also can include a show button 60 to control the output of the displays 17, 30, and 47. For example, the show button 60 can be used to display hints, such as hints selected by the hint select buttons 58, in the hint display 17 or hint difference display 47.

The tool bar also includes a change button 64 for replacing old hints 13 with corresponding new hints 43. The hint select buttons 58 can be used with the change button 64 to select all hints or only a subgroup of hints for replacement. The tool bar can also include a show hints differences button 66 for showing difference hints in the display 47.

The hint editor 20 can be implemented as a module for existing image processing applications such as Photoshop or Adobe Acrobat applications among others, or as a stand alone application.

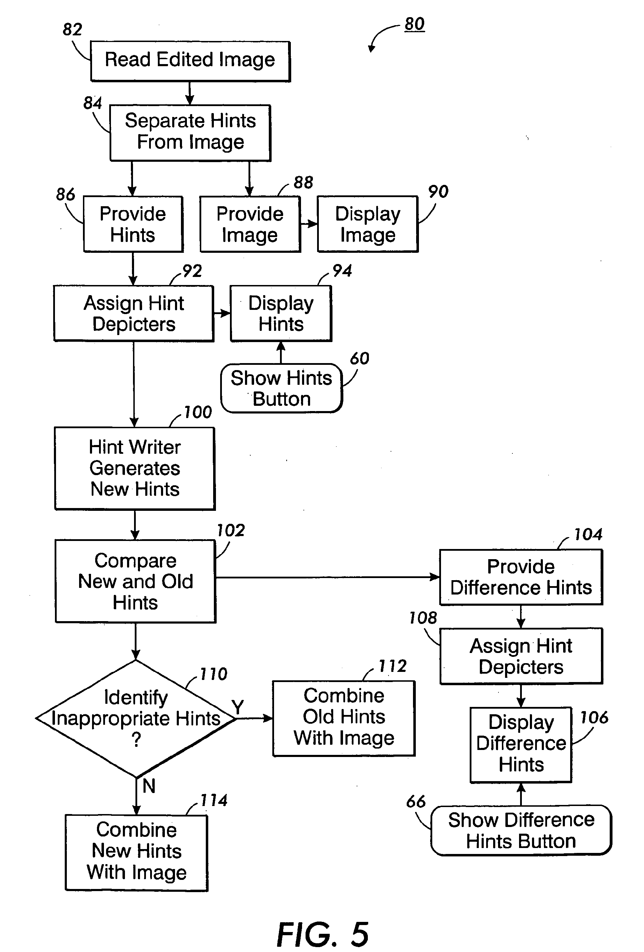

The invention can further include a method for editing rendering hints for an image defined in an edited raster content image file shown generally at 80 in Fig. 5. The method includes reading the edited image at 82 and separating the old hints 13 from the edited image file at 84 to provide the hints 13 at 86 and the image data 12 at 88. The image can be displayed at 90. Hint depicters 34 can be assigned at 92, as described above.

The method also includes displaying a visual representation of at least some of the hints in the edited image file at 94 in the hint display 13 in a manner as described above. The method further includes generating new hints 43 at 100 using a hints writer 40 as described above, and comparing at 102 the new hints 43 with the old hints 13.

The method further includes providing difference hints 46, as described above, at 104. The method further includes displaying the difference hints 46 at 106 in the hint difference display 47. Hint depicters 34 can be assigned to the difference hints 46 at 108 prior to displaying the difference hints 46, if desired, as described above.

The method further includes identifying inappropriate hints at 110 using the hint display 17 and hint difference display 47 as described above.

The user can then combine the old hints with the edited image at 112 if the user does not find inappropriate hints, or if the user decides that any inappropriate hints found do not merit replacement. Alternatively, the user can combine the new hints, or a subgroup thereof, with the image at 114.

According to an advantageous embodiment, a method is provided for editing an image defined by a raster content image file, wherein the method comprises providing rendering hints for the image, wherein the rendering hints include hint indices defining hinting actions and location data defining the image locations of the hinting actions; and displaying a visual representation of at least some of the rendering hints apart from the image. The method may further comprise selecting a subgroup of the rendering hints, wherein the displaying step comprises displaying a visual representation of the selected rendering hints apart from the image.

According to one advantageous embodiment, the method for editing an image defined by a raster content image file may further comprise assigning index depicters to least some of the hint indices for representing and identifying the rendering hints, wherein the displaying step includes displaying the index depicters apart from the image and in locations which correspond to the image locations defined by the location data.

According to another advantageous embodiment, the method for editing an image defined by a raster content image file may further comprise editing the rendering hints.

According to a further advantageous embodiment, the method for editing an image defined by a raster content image file comprises editing the rendering hints, wherein the editing step may further comprise: generating new rendering hints; identifying inappropriate rendering hints; and replacing the at least some of the inappropriate rendering hints with the new rendering hints.

According to still another advantageous embodiment, a method is provided for editing rendering hints for an image defined by a raster content image file. The method comprises providing rendering hints for the image, wherein the rendering hints include hint indices defining hinting actions and location data defining the image locations of the hinting actions; and displaying a visual representation of at least some of the rendering hints apart from the image. The method may further include displaying the image without rendering hints.

According to still a further advantageous embodiment, the method for editing rendering hints for an image defined by a raster content image file may further comprise generating new rendering hints.

According to yet another advantageous embodiment, in a method for editing rendering hints for an image defined by a raster content image file, the location data may include image coordinates, and a displaying step may include displaying the image coordinates.

According to yet a further advantageous embodiment, the method for editing rendering hints for an image defined by a raster content image file comprises the displaying step, wherein the displaying step may include displaying a visual representation of at least some of the hint indices apart from the image and in locations corresponding to the image locations defined by the location data.

According to another advantageous embodiment, in a method for editing rendering hints for an image defined by a raster content image file, the rendering hints may include more than one hint index corresponding to the same image location, and a displaying step may include displaying these hint indices one at a time.

According to a further advantageous embodiment, the method for editing rendering hints for an image defined by a raster content image file comprises the displaying step, wherein the displaying step may include displaying the index depicters in locations which correspond to the image locations defined by the location data.

According to still another advantageous embodiment, index depicters may be colors.

According to still a further advantageous embodiment, index depicters may be symbols.

According to yet another advantageous embodiment, the method for editing rendering hints for an image defined by a raster content image file may further comprise identifying inappropriate rendering hints.

According to yet a further advantageous embodiment, the method for editing rendering hints for an image defined by a raster content image file comprises rendering hints that may be old rendering hints. The method may further comprise generating new rendering hints; and displaying at least some of the new rendering hints.

According to another advantageous embodiment, the method for editing rendering hints for an image defined by a raster content image file comprises the displaying step, wherein the displaying step may include displaying at least some of the new rendering hints apart from the old rendering hints.

According to a further advantageous embodiment, wherein the rendering hints are old rendering hints and the method for editing rendering hints for an image defined by a raster content image file comprises: generating new rendering hints; comparing the old rendering hints and the new rendering hints to obtain difference hints; and displaying at least some of the difference hints, wherein the comparing step may include comparing the hint indices of the new hints and old hints corresponding to the same image locations to obtain difference hints which are new hints.

According to still another advantageous embodiment, wherein the rendering hints are old rendering hints and the method for editing rendering hints for an image defined by a raster content image file comprises: generating new rendering hints; comparing the old rendering hints and the new rendering hints to obtain difference hints; and displaying at least some of the difference hints, wherein the comparing step may include comparing the hint indices of the new hints and old hints for the same locations to obtain difference hints which are old hints.

According to still a further advantageous embodiment, the method for editing rendering hints for an image defined by a raster content image file may further comprise converting layer hints to basic pixel hints and composite pixel hints.

According to yet another advantageous embodiment, the method for editing rendering hints for an image defined by a raster content image file may further comprise selecting at least some of the rendering hints, wherein the displaying step may include displaying a visual representation of the selected rendering hints apart from the image.

According to yet a further advantageous embodiment, a hint editor is provided for editing rendering hints which correspond to an image defined by a raster content image file, wherein the hints include hint indices defining hinting actions and location data defining the image locations of the hinting actions. The hint editor comprises: a hint reader for reading hints to find the hint indices and the location data; and a hint display for displaying a visual representation of the hint indices and the location data apart from the image. The hint editor may further comprise an image display for displaying the image without hints.

According to another advantageous embodiment, the hint editor comprises the hint display, wherein the hint display displays the hints selected with the means for selecting specific hints.

According to a further advantageous embodiment, wherein the hints are old hints and the hint editor comprises: a hint writer for generating new hints; and a hint difference display for displaying the new hints apart from the old hints. The hint editor may further comprises selecting means for selecting specific new hints and means for replacing old hints with the selected new hints.

## Claims

1. A method for editing rendering hints for an image defined by a raster content image file comprising:
providing rendering hints for the image, wherein the rendering hints include hint indices defining hinting actions and location data defining the image locations of the hinting actions; and
displaying a visual representation of at least some of the rendering hints apart from the image.

2. The method for editing rendering hints defined in claim 1 wherein the rendering hints are included in the raster content image file, the method further comprising:
separating the rendering hints from the image file;
generating new rendering hints; and
combining at least some of the new rendering hints with the image file.

3. The method for editing rendering hints defined in claim 1 further comprising assigning index depicters to a least some of the hint indices for representing and identifying the rendering hints, wherein the displaying step includes displaying the index depicters in locations which correspond to the image locations defined by the location data.

4. The method for editing rendering hints defined in claim 1 further comprising:
identifying inappropriate rendering hints;
generating new rendering hints;
selecting new rendering hints; and
replacing at least some of the inappropriate hints with the selected new hints.

5. The method for editing rendering hints defined in claim 1 wherein the rendering hints are old rendering hints, the method further comprising:
generating new rendering hints;
comparing the old rendering hints and the new rendering hints to obtain difference hints; and
displaying at least some of the difference hints.

6. A hint editor for editing rendering hints which correspond to an image defined by a raster content image file, wherein the hints include hint indices defining hinting actions and location data defining the image locations of the hinting actions, the hint editor comprising:
a hint reader for reading hints to find the hint indices and the location data; and
a hint display for displaying a visual representation of the hint indices and the location data apart from the image.

7. The hint editor defined in claim 6 further comprising assigning means for assigning index depicters to represent and identify the hint indices, wherein the hint display displays the index depicters apart from the image and in locations which correspond to the image locations defined by the location data.

8. The hint editor defined in claim 6 wherein the hints are old hints, further comprising:
a hint writer for generating new hints; and
a hint difference display for displaying the new hints apart from the old hints.

9. The hint editor defined in claim 6 further comprising selecting means for selecting specific hints.

10. A method for editing an image defined by a raster content image file comprising:
providing rendering hints for the image, wherein the rendering hints include hint indices defining hinting actions and location data defining the image locations of the hinting actions; and
displaying a visual representation of the rendering hints apart from the image.
